(19) Europäisches Patentamt
European Patent Office
Office européen des brevets

(11) EP 1 566 415 B1

(12) EUROPÄISCHE PATENTSCHRIFT

(45) Veröffentlichungstag und Bekanntmachung des Hinweises auf die Patenterteilung:
**28.02.2007 Patentblatt 2007/09**

(51) Int Cl.:
***C09D 11/00*** *(2006.01)* ***C09D 17/00*** *(2006.01)*

(21) Anmeldenummer: **05000297.1**

(22) Anmeldetag: **08.01.2005**

# (54) Wässrige, kolloidale Gasrusssuspension

Aqueous colloidal suspension of furnace black

Suspension aqueuse colloidale de noir fourneau

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**HR**

(30) Priorität: **18.02.2004 DE 102004007780**

(43) Veröffentlichungstag der Anmeldung:
**24.08.2005 Patentblatt 2005/34**

(73) Patentinhaber: **Degussa GmbH**
**40474 Düsseldorf (DE)**

(72) Erfinder:
- **Kalbitz, Werner**
  **63517 Rodenbach (DE)**
- **Tauber, Gerd**
  **63500 Seligenstadt (DE)**
- **Zoch, Heinz, Dr.**
  **63477 Maintal (DE)**
- **Lüdtke, Stephan**
  **63477 Maintal (DE)**
- **Lüthge, Thomas, Dr.**
  **63452 Hanau (DE)**
- **McIntosh, Ralph**
  **63457 Hanau (DE)**

(56) Entgegenhaltungen:
**EP-A- 1 215 250**
**WO-A-20/04046256**
**US-A- 3 687 887**
**US-B1- 6 251 174**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine wäßrige, kolloidale Gasrußsuspension, ein Verfahren zu deren Herstellung sowie deren Verwendung.

Es ist bekannt, wäßrige, kolloidale Rußsuspensionen zur Herstellung von Lacken, Druckfarben oder auch direkt als Tinten, zum Beispiel bei Tintenstrahldruckern (Ink-Jet), zu verwenden (US-A 5,085,698, US-A 5,320,668).

Weiterhin ist bekannt, Rußsuspensionen unter Verwendung von Farbstoffen, die gleichzeitig als Netzmittel wirken, ohne Zugabe von weiteren Netzmitteln herzustellen (US 9,911,935).

Ferner ist bekannt, wäßrige Rußsuspensionen unter Verwendung von wasserlöslichen Netzmitteln, beispielsweise Acrylharzen (US-A 5,609,671) oder Ethoxylaten (DE 19824947 A1), herzustellen.

Aus EP 1215250 A1 sind Ink-Jet Tinten bekannt, die ein Lösungsmittel, ein Pigmentfarbstoff und zusätzlich einen in dem Lösungsmittel löslichen Farbstoff, dessen Absorptionsmaximum im Wellenlängenbereich 500 nm bis 700 nm liegt, enthalten.

Nachteile der bekannten netzmittelstabilisierten Rußsuspensionen sind, bei Verwendung von nichtionogenen Tensiden, das zu hohe Zetapotential und die niedrige Oberflächenspannung und, bei Verwendung von anionischen Tensiden, die zu starke Benetzung des Papiers auf Grund der starken Wechselwirkungen mit der ebenfalls anionischen Papierbeschichtung, was zu niedrigen optischen Druckdichten führt.

Weitere Nachteile der bekannten farbstoffstabilisierten Rußsuspensionen sind die unzureichende Lager- und Gefrierstabilität. Dies führt bei längeren Standzeiten der Dispersionen, oder bei Lagertemperaturen von mehr als 50 °C beziehungsweise weniger als 0 °C zu einem starken und irreversiblen Anstieg der Viskosität, zur Reagglomeration der suspendierten Pigmentteilchen oder zur völligen Flokkulation der Suspension. Weiterhin zeigen Inkjet Drucke mit bekannten farbstoffstabilisierten Russdispersionen eine mangelnde Wasserbeständigkeit, die einen erheblichen anwendungstechnischen Nachteil darstellt. Ferner ist bei Verwendung von Furnacerußen eine relativ geringe optische Dichte zu beobachten.

Aufgabe der vorliegenden Erfindung ist es, eine wäßrige Gasrußsuspension zur Verfügung zu stellen, die hohe optische Dichten auf Trägermaterialien, wie beispielsweise Papier, ein niedriges Zetapotential, eine hohe Oberflächenspannung, eine niedrige Viskosität, eine gute Lagerstabilität und eine exzellente Wasserbeständigkeit im Inkjet Druck aufweist.

Gegenstand der Erfindung ist eine wäßrige, kolloidale Gasrußsuspension, welche dadurch gekennzeichnet ist, dass diese
einen Gasruß, zwischen 0,1 und 1 Gew.-% einer Azoverbindung der allgemeinen Formel 1,

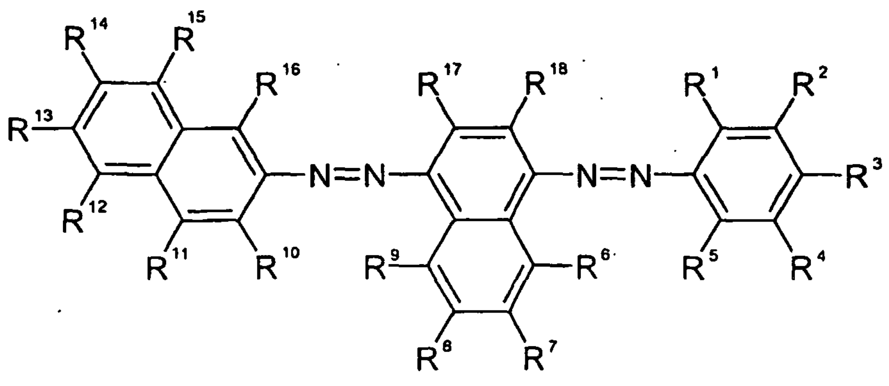

wobei $R^1$ - $R^{18}$ gleich oder verschieden sein können und aus Wasserstoff, hydrophilen oder hydrophoben Gruppen, Akzeptor- oder Donatorsubstituenten oder Teilen von aliphatischen, aromatischen oder heteroaromatischen, acyclischen, cyclischen oder mehrfach cyclischen Systemen mit Akzeptor-, Donator-, hydrophilen oder hydrophoben Gruppen bestehen, und Wasser enthält. Kolloidal bedeutet die gleichmäßige Verteilung von Teilchen mit Durchmesser von 10 nm - 10 μm in einem Suspensionsmittel.

Für die Verwendung in Tinten kann eine niedrige Viskosität je nach Druckverfahren vorteilhaft sein, um die gewünschten Druckeigenschaften, beispielsweise Druckschärfe, zu erhalten. Ein niedriges Zetapotential, das den Ladungszustand der Teilchen in der Rußsuspension beschreibt, ist eine Meßgröße für die gute Suspensionsstabilität. Eine hohe Oberflächenspannung beeinflußt, beispielsweise beim Inkjet-Verfahren positiv die Tröpfchenbildung. Ein hoher Dispergiergrad ist von wesentlicher Bedeutung für eine gute Lagerstabilität, für gute koloristische Eigenschaften in der Anwendung und zur Verhinderung von Düsenverstopfungen speziell beim Inkjet-Verfahren. Weiterhin ist speziell eine gute Wasserbeständigkeit der Drucke von Vorteil, da Außenanwendungen eine steigende Bedeutung im Inkjet Verfahren

haben.

Der Gasruß kann einen Flüchtigenanteil (950°C) von < 21 Gew.-%, bevorzugt < 6 Gew.-%, aufweisen. Der Gasruß kann eine BET-Oberfläche von 80 bis 350 $m^2$ / g aufweisen. Der Gasruß kann eine Primärteilchengröße von 8 bis 40 nm, bevorzugt von 13 bis 30 nm, insbesondere bevorzugt von 13 - 20 nm, aufweisen. Der Gasruß kann eine DBP-Zahl von 40 bis 200 ml / 100 g aufweisen.

Der Gasruß kann auch eine Mischung von verschiedenen Gasrußen sein.

Als Gasruße können beispielsweise Farbruß FW 200, Farbruß FW 2, Farbruß FW 2 V, Farbruß FW 1, Farbruß FW 18, Farbruß S 170, Farbruß S 160, Spezialschwarz 6, Spezialschwarz 5, Spezialschwarz 4, Spezialschwarz 4A, NIPex 150, NIPex 160 IQ, NIPex 170 IQ, NIPex 180 IQ, Printex U, Printex V, Printex 140 U oder Printex 140 V der Firma Degussa AG verwendet werden.

Der Gasrußanteil in der erfindungsgemäßen wäßrigen, kolloidalen Rußsuspension kann unter 30 Gew.-%, bevorzugt unter 20 Gew.-%, sein.

Die Azoverbindung der allgemeinen Formel 1 kann die allgemeine Formel 1 ein- oder mehrfach in der Azoverbindung enthalten.

Die hydrophilen oder hydrophoben Gruppen der Substituenten $R^1$ - $R^{18}$ können OH, $-SO_3R^{19}$, $COOR^{19}$, Alkyl-, Aryl oder ganz oder teilweise halogenierte Halogenalkyl- oder Hälogenaryl-Gruppen, wie beispielsweise ganz oder teilweise fluorierte Alkyl- oder Arylgruppen, sein, mit $R^{19}$ = H, Metallkation, Ammonium, Alkyl, Aryl oder funktionalisiertes Alkyl oder Aryl, wie beispielsweise ω-Carboxyalkyl, $HSO_3$-$C_xH_y$-, $H_2N$-$C_xH_y$- oder $H_2N$-$SO_2$-$C_xH_y$- (x =1-20; y = 1-45).

Die Akzeptor- oder Donatorsubstituenten der Substituenten $R^1$ - $R^{18}$ können $COOR^{19}$, $-CO-R^{19}$, -CN, $-SO_2R^{19}$ oder $-SO_2OR^{19}$, Alkyl-, Arylgruppen, $OR^{20}$, $N(R^{20})_2$, $SR^{20}$ oder $P(R^{20})_2$, sein, mit $R^{20}$=H, Alkyl, Aryl oder funktionalisiertes Alkyl oder Aryl, Oligomere oder Polymere der Form $-(O-R^{20})_y-OR^{21}$, mit $R^{21}$ = H, Alkyl oder Aryl.

Die unsubstituierten oder substituierten, aliphatischen oder aromatischen Substituenten der Substituenten $R^1$ - $R^{18}$ können Phenyl-, Naphthyl- oder heteroaromatische Substituenten, wie beispielsweise Pyrrolyl-, Pyridinyl-, Furyl- oder Puryl-, sein.

Als Azoverbindung der allgemeinen Formel 1 können beispielsweise eingesetzt werden

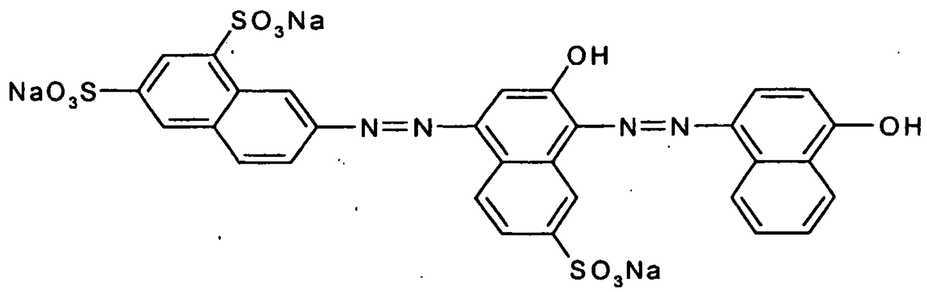

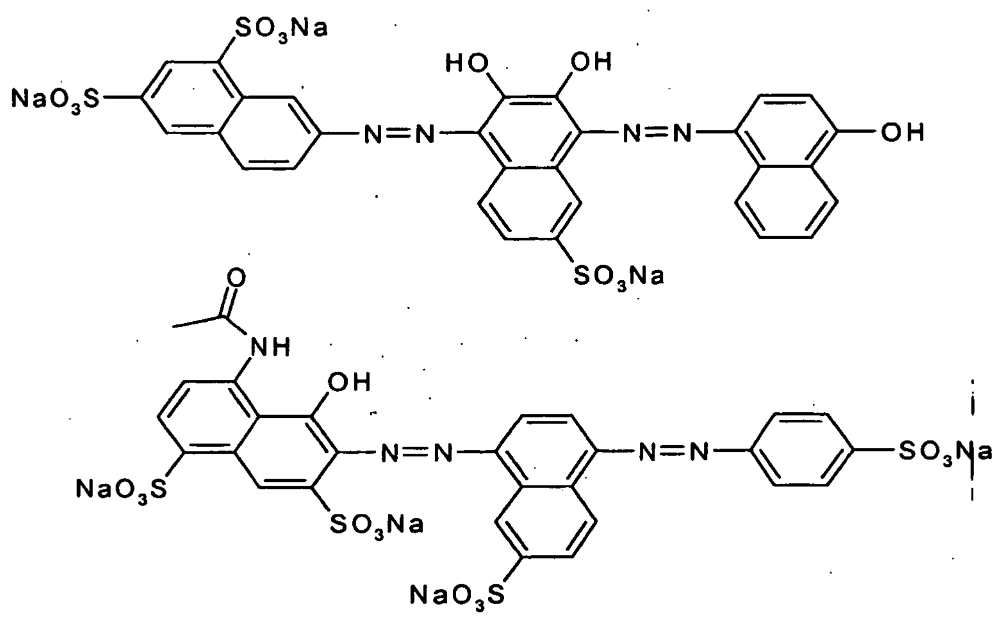

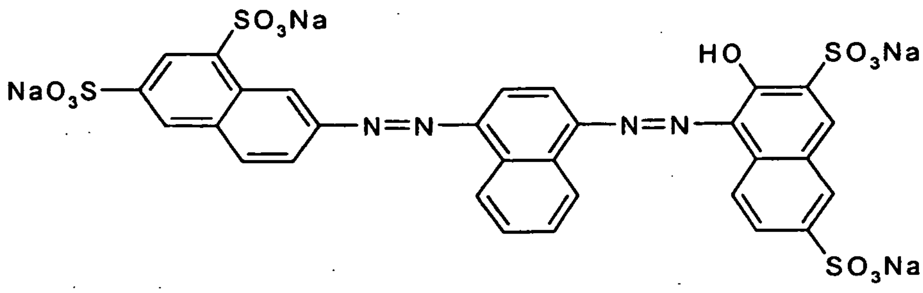

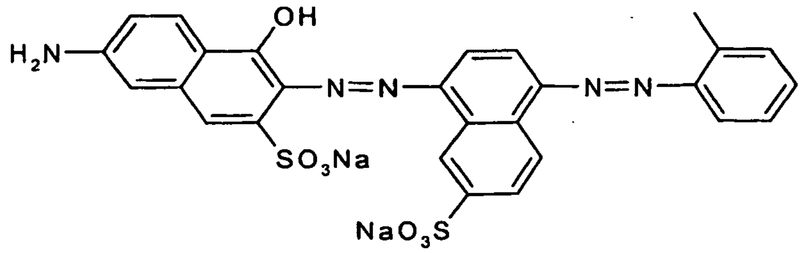

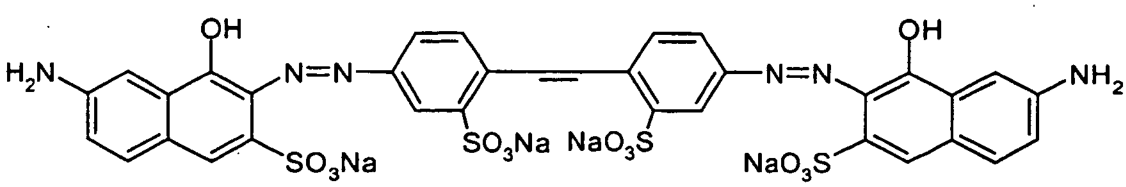

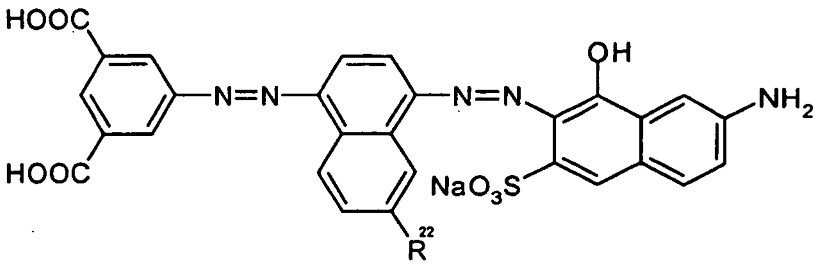

$R^{22}$ =H, $SO_3Na$

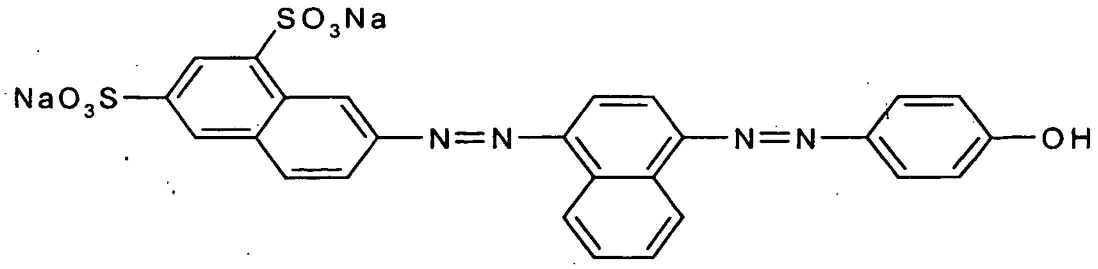

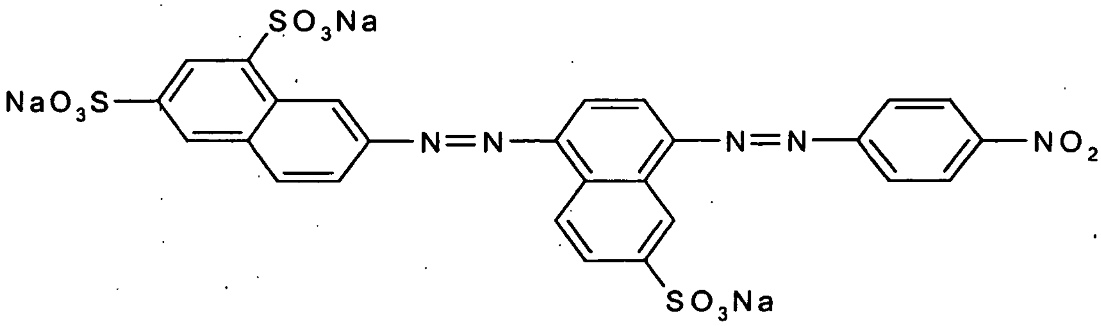

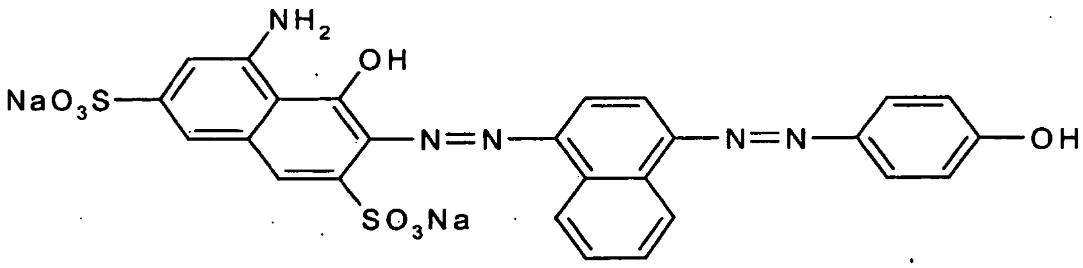

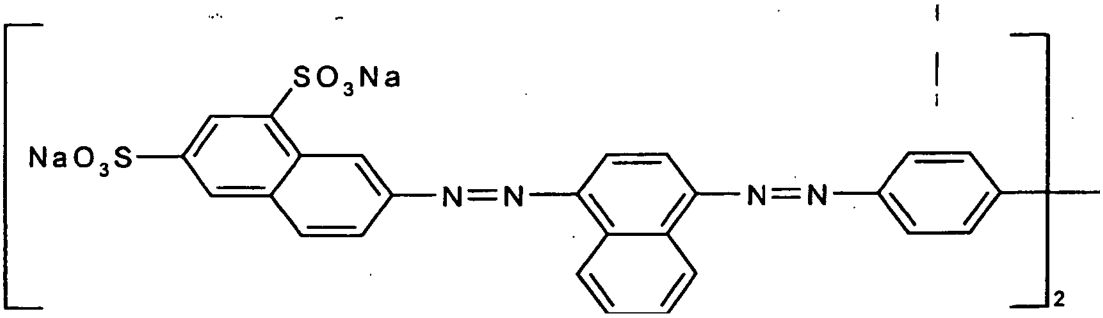

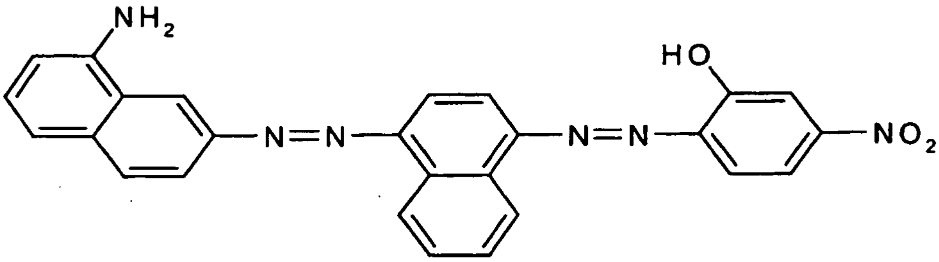

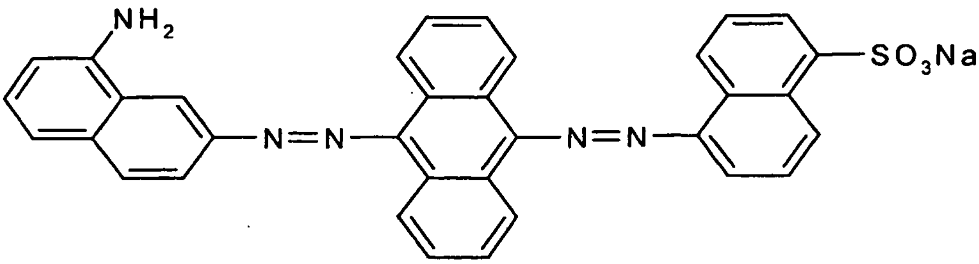

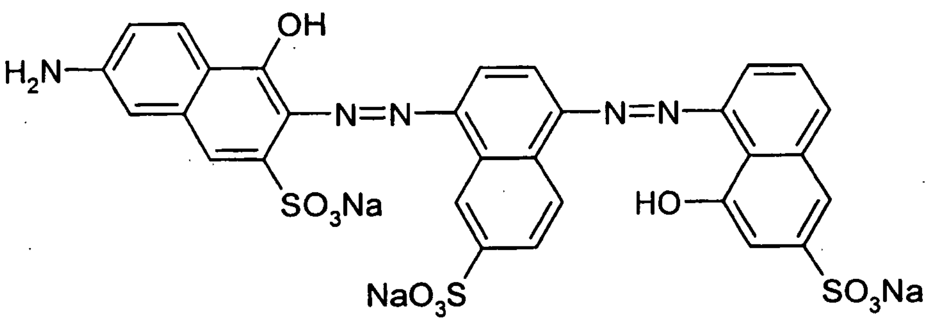

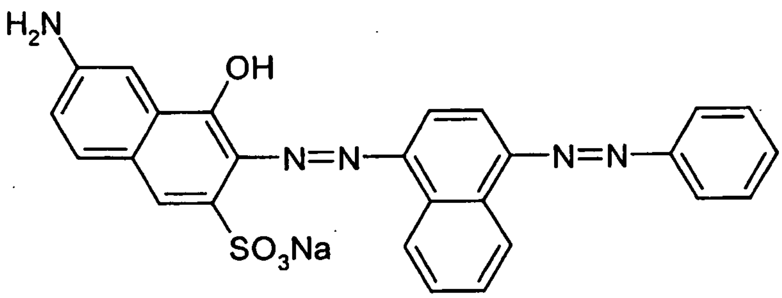

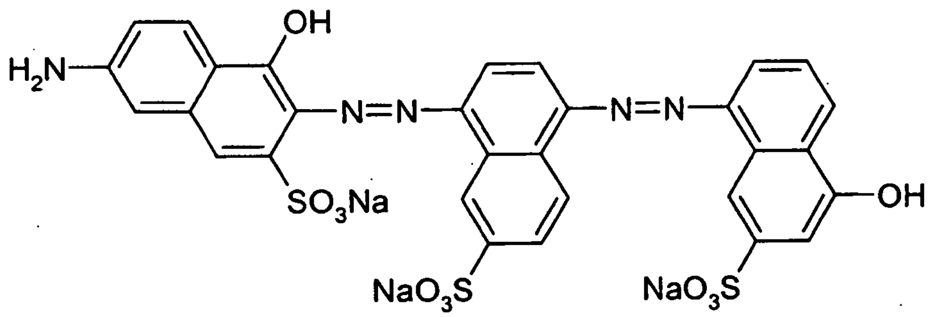

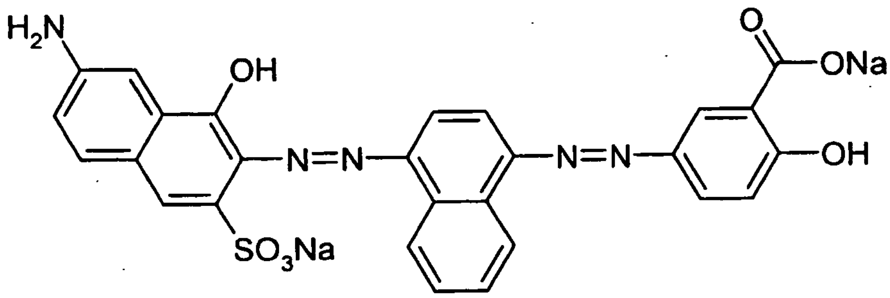

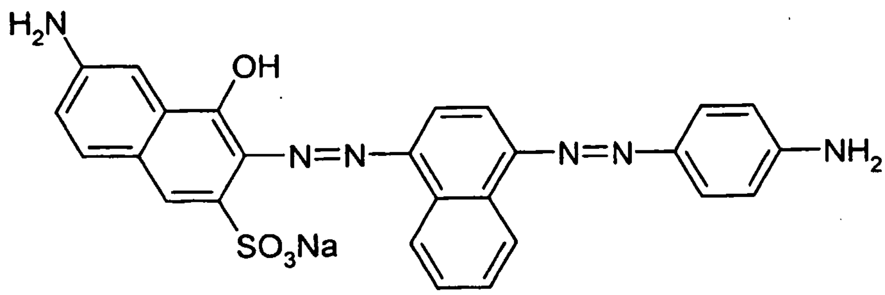

Als Azoverbindung der allgemeinen Formel 1 können beispielsweise verwendet werden Tetranatrium-6-amino-4-hydroxy-3-[[7-sulfonato-4-[(4-sulfonatophenyl)azo]-1-naphth-1-yl]azo]naphthalen-2,7-disulfonat,

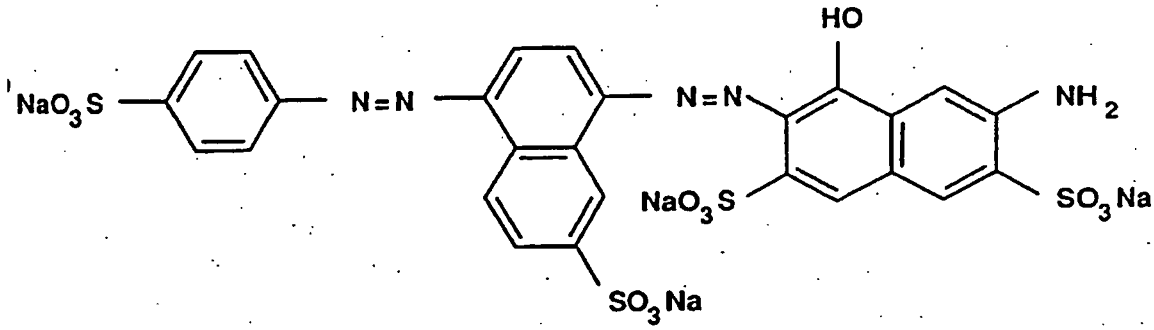

5-[4-(4-(7-[[2-ethoxy-4-(4-methyl-2-sulfo-phenylazo)-6-sulfo-naphthalen-1-yl]azo]-8-hydroxy-3,6-disulfonaphthalen-1-ylamino)-6-phenylsulfanyl-[1,3,5]triazin-2-ylamino]-phenylazo]-2-hydroxy-benzoesäure oder deren Salze mit Alkalimetallkationen beziehungsweise Ammoniumionen als Gegenion

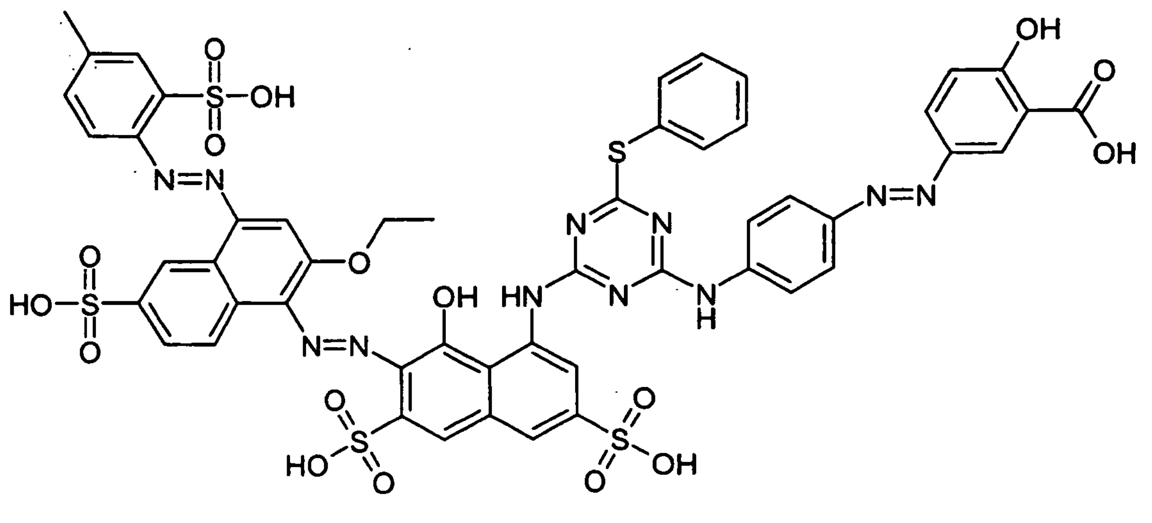

oder
2-[[4-[(1-hydroxy-6-phenylamino-3-sulfo-naphthalen-2-yl)azo]-6-sulfo-naphthalen-1-yl]azo]-5-methyl-benzen-1,4-disulfonsäure oder deren Salze mit Alkalimetallkationen beziehungsweise Ammoniumionen als Gegenion

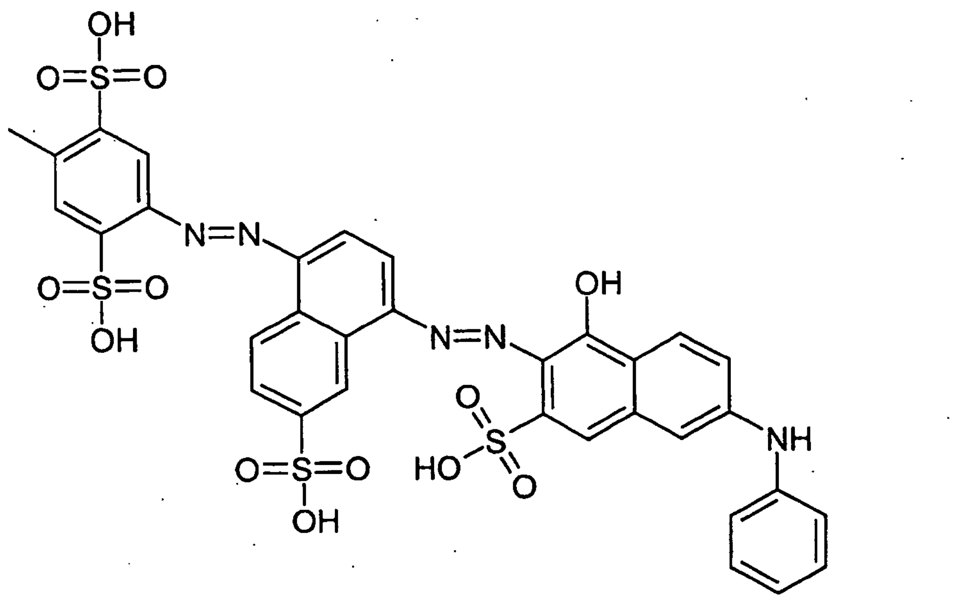

Die Azoverbindung der allgemeinen Formel 1 kann weniger als 30 Gew.-%, vorzugsweise weniger als 20 Gew.-%, Verunreinigung enthalten.

Die Azoverbindung der allgemeinen Formel 1 kann weniger als 10 Gew.-%, vorzugsweise weniger als 5 Gew.-%, besonders bevorzugt weniger als 2500ppm, Salz enthalten. Die Azoverbindung der allgemeinen Formel 1 kann mindestens 100ppm Salz enthalten.

Die Azoverbindungen 2-[[4-[(1-hydroxy-6-phenylamino-3-sulfo-naphthalen-2-yl)azo]-6-sulfo-naphthalen-1-yl] azo]-5-methyl-benzen-1,4-disulfonsäure, 5-[4-(4-(7-[[2-ethoxy-4-(4-methyl-2-sulfo-phenylazo)-6-sulfo-naphthalen-1-yl] azo]-8-hydroxy-3,6-disulfo-naphthalen-1-ylamino)-6-phenylsulfanyl-[1,3,5]triazin-2-ylamino]-phenylazo]-2-hydroxybenzoesäure oder Tetranatrium-6-amino-4-hydroxy-3-[[7-sulfonato-4-[(4-sulfonatophenyl)azo]-1-naphth-1-yl]azo] naphthalen-2,7-disulfonat, können weniger als 10 Gew.-%, vorzugsweise weniger als 5 Gew.-%, Salz enthalten.

In einer bevorzugten Ausführungsform kann die erfindungsgemäße wäßrige, kolloidale Gasrußsuspension netzmittelfrei, der Anteil der Azoverbindung der allgemeinen Formel 1 zwischen 0,1 und 1 Gew.-% und der Salzgehalt

der erfindungsgemäßen wäßrigen, kolloidalen Gasrußsuspension weniger als 2500ppm, bevorzugt zwischen 100 und 2500ppm, sein.

Die erfindungsgemäße wäßrige, kolloidale Gasrußsuspension kann Biozide, Netzmittel und / oder Additive enthalten.

Die erfindungsgemäße wäßrige, kolloidale Gasrußsuspension kann ein Biozid enthalten. Das Biozid kann in Mengen von 0,01 -1,0 Gew.-% zugesetzt werden. Als Biozid können Isothiazolinon-Derivate, Formaldehydabspalter oder Kombinationsprodukte beider Produktklassen verwendet werden. Beispielsweise können als Biozid Parmetol der Firma Schülke & Mayr, Ebotec der Firma Bode Chemie, Acticide der Firma Thor Chemie oder Proxel der Firma Zenecä eingesetzt werden.

Die erfindungsgemäße wäßrige, kolloidale Gasrußsuspension kann netzmittelfrei sein. Weiterhin können Netzmittel in Mengen von 0 - 1 Gew.-%, vorzugsweise von 0,4 - 0,6 Gew.-%, bezogen auf die Gesamtsuspension, zugesetzt werden. Als Netzmittel können Verbindungsklassen, wie Fettalkoholethoxylate, Polyacrylsäure oder/und deren Derivate, Copolymere enthaltend Acrylsäure, Acrylsäurederivate, Styrole, Styrolderivate und/oder Polyether, Ligninsulfonate, Alkylbenzolsulfonate, Naphthalinsulfonsäurederivate, Copolymere enthaltend Maleinsäureanhydrid und/oder Maleinsäurederivate oder Kombinationen aus den genannten Netzmitteln eingesetzt werden. Die Copolymere können statistische oder alternierende Block- oder Pfropfcopolymere sein. Beispielsweise kann als dispergierunterstützendes Netzmittel Joncryl 678, Joncryl 680, Joncryl 682 oder Joncryl 690 der Firma Johnson Polymer B.V. verwendet werden.

Als dispergierunterstützendes Netzmittel kann vorzugsweise vollständig Ammonium- oder Alkalihydroxid -neutralisierte Formen, insbesondere NaOH neutralisierte Formen, der Styrol-Acrylsäure Copolymere verwendet werden.

Andere Typen von Netzmitteln können ebenfalls zur Herstellung der erfindungsgemäßen wäßrigen, kolloidalen Gasrußsuspension verwendet werden.

Desweiteren können Additive, wie Alkohole oder Glykole, beispielsweise 1,5-Pentandiol, Glykolether, wie Dipropylenglykol, Heterozyklen, wie 2-Pyrrolidon, oder Glyzerin, der erfindungsgemäßen wäßrigen, kolloidalen Gasrußsuspension zugesetzt werden.

Der Anteil der Additive in der erfindungsgemäßen wäßrigen, kolloidalen Gasrußsuspension kann unter 30 Gew.-%, bevorzugt unter 15 Gew.-%, sein.

Ein weiterer Gegenstand der Erfindung ist ein Verfahren zur Herstellung der erfindungsgemäßen wäßrigen, kolloidalen Gasrußsuspension, welches dadurch gekennzeichnet ist, daß man den Gasruß und die Azoverbindung der allgemeinen Formel 1 in Wasser dispergiert.

Die Dispergierung kann man mit Perlmühlen, Ultraschall-Geräten, Hochdruckhomogenisatoren, Microfluidizer, Ultra-Turrax oder vergleichbaren Aggregaten durchführen. Im Anschluß an die Dispergierung kann die wäßrige, kolloidale Gasrußsuspension durch Zentrifugieren und/oder Filtrieren gereinigt werden.

Ein weiterer Gegenstand der Erfindung ist die Verwendung der erfindungsgemäßen wäßrigen, kolloidalen Gasrußsuspension in Tinten, Ink Jet Tinten, Lacken, Druckfarben, Latizes, Textilien, Leder, Klebstoffen, Silikonen, Kunststoffen, Beton und Baustoffen.

Die erfindungsgemäßen wäßrigen, kolloidalen Gasrußsuspensionen können zum Einfärben, zur antistatischen Ausrüstung, zur Verstärkung, und zum UV-Schutz von Materialien verwendet werden.

Ein weiterer Gegenstand dieser Erfindung ist eine Tinte, welche dadurch gekennzeichnet ist, daß diese die erfindungsgemäße wäßrige, kolloidale Gasrußsuspension enthält und der Gehalt an Azoverbindung der allgemeinen Formel 1 zwischen 0,01 und 0,5 Gew.-% ist.

Die erfindungsgemäße Tinte kann Azoverbindungen der allgemeinen Formel 1 zwischen 0,05 und 0,3 Gew.-% enthalten.

Die erfindungsgemäße Tinte kann weniger als 0,05 Gew.-%, vorzugsweise weniger als 0,025 Gew.-%, Salz enthalten. Die erfindungsgemäße Tinte kann mindestens 10ppm Salz enthalten.

In einer bevorzugten Ausführungsform kann die erfindungsgemäße Tinte netzmittelfrei, der Anteil der Azoverbindung der allgemeinen Formel 1 zwischen 0,01 und 0,5 Gew.-% und der Salzgehalt der erfindungsgemäßen Tinte weniger als 250ppm, bevorzugt zwischen 10 und 250ppm, sein.

Die Vorteile der erfindungsgemäßen wäßrigen, kolloidalen Gasrußsuspensionen sind die hohen optische Dichten, das niedrige Zeta-Potential, die hohe Oberflächenspannung, die guten Lagerstabilitäten, der hohe Dispergiergrad sowie die gute Wasserbeständigkeit der getrockneten Drucke.

Beispiele:

Beispiel 1:

Herstellung der Rußsuspensionen:

1. Vorbereitung der Suspensionsherstellung

Alle Bestandteile außer Ruß werden in einem Behälter vorgelegt und unter Rühren homogenisiert.

Der Ruß wird in die Lösung unter langsamen Rühren (entweder von Hand oder mit langsamen Rührwerk) nach und nach eingearbeitet.

2. Dispergierung

Die in Punkt 1 vorbereitete Suspension wird mit dem Ultraschall - Gerät dispergiert. In der Zentrifuge können sehr grobe Teilchen von der so erhaltenen Suspension abgetrennt werden.

In Tabelle 1 sind die Zusammensetzungen und Eigenschaften von Referenzsuspensionen und der erfindungsgemäßen wäßrigen, kolloidalen Gasrußsuspension 1 dargestellt.

Tabelle 1:

| | | Referenzsuspension | Referenzsuspension | Referenzsuspension | erfindungsgemäße wäßrige, kolloidale Gasrußsuspension |
|---|---|---|---|---|---|
| | | 1 | 2 | 3 | 1 |
| NIPex 160 IQ | % | --- | --- | --- | 15 |
| Spezialschwarz 550 | % | 15 | 15 | 15 | --- |
| Azoverbindung der allg. Formel 1 | % | 0,7 | 1,0 | 3,0 | 0,7 |
| Acticide MBS | % | 0,3 | 0,3 | 0,3 | 0,3 |
| Deionisiertes Wasser | % | 84,0 | 83,7 | 81,7 | 84,0 |
| | | | | | |
| Suspensionskonsistenz | | flüssig | flüssig | flüssig | flüssig |
| Dispergiergrad lichtmikroskopisch | | schlecht | schlecht | schlecht | sehr gut |
| Lagerstabilität 50 °C über 28 Tage | | Sediment | Sediment | Sediment | sehr gut |
| Optische Dichte einer Ink Jet Tinte 6 µm Draw Downs auf Data Copy Papier | | n.a. | n.a. | n.a. | 1,5 |
| n.a. =nicht anwendbar | | | | | |

Spezialschwarz 550 ist ein oxidierter Furnaceruß der Degussa AG mit einer Primärteilchengröße von 25 nm. NIPex 160 IQ ist ein Gasruß der Degussa mit einer Primärteilchengröße von 20 nm.
Acticide MBS ist ein Biozid der Firma Thor Chemie. Als Azoverbindung der Formel 1 wird Tetranatrium-6-amino-4-hydroxy-3-[[7-sulfonato-4-[(4-sulfonatophenyl)azo]-1-naphth-1-yl]azo]naphthalen-2,7-disulfonat mit der Formel

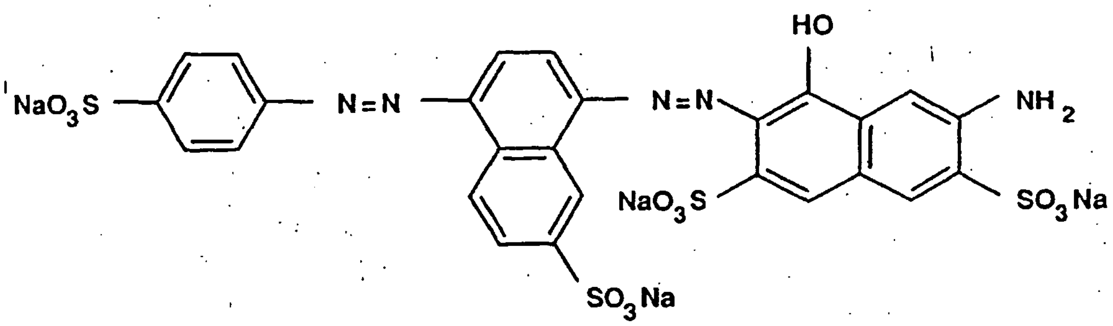

der Firma Bayer verwendet. Diese Azoverbindung hat einen Salzgehalt von 312 ppm.

Salzgehaltbestimmung

Der Salzgehalt der Azoverbindung ist die Summe aus Natriumsulfat, gemessen durch die Sulfatkonzentration und umgerechnet auf Natriumsulfat, und Natriumchlorid, gemessen durch die Chloridkonzentration und umgerechnet auf Natriumchlorid.

Bestimmung der Sulfatkonzentration

Grundlage des Verfahrens

Als Trennsäule wird ein Ionenaustauscher niedriger Kapazität benutzt.
Die Elution der Ionen erfolgt mit Elektrolyten. Für die Detektion wird ein Leitfähigkeitdetektor eingesetzt.

Chemikalien

Reinstwasser (Leitfähigkeit <0,1 $\mu$S/cm)
Sulfat-Stammlösung $w(SO_4)$ = 1000 mg/l
Eluent $Na_2CO_3/NaHCO_3$ (2,2/2, 8 mmol/l)

Geräte

Taumler

Ionenchromatograph mit Leitfähigkeitdetektor Ionenaustauscher niedriger Kapazität

Prinzip

Die Proben werden mit Reinstwasser 1h bei Raumtemperatur im Taumler eluiert und Sulfat ionenchromatographisch im Eluat bestimmt.

Durchführung

Ca. 200 mg Probe werden in ein verschließbares Probenröhrchen eingewogen und 1 h mit Reinstwasser bei Raumtemperatur im Taumler eluiert.

Anschließend wird die Suspension in einen Meßkolben überführt und mit Reinstwasser bis zur Marke aufgefüllt. Der Meßkolben sollte so gewählt werden, daß die Probelösung 0,5 - 40 mg/l $SO_4^{2-}$ enthält.
Die Probelösung wird über ein 0,2 μm Spritzenfilter in den Ionenchromatograph eingespritzt. Die Sulfatkonzentration wird unter Verwendung der gemessenen Peakfläche berechnet.

Berechnung

$$w(SO_4^{2-})\ [\%] = \frac{\beta \bullet V \bullet 100}{m}$$

β = Konzentration der Probelösung in mg/l
V = Volumen der Probelösung in 1
m = Einwaage in mg
100 = Umrechnungsfaktor in %

$$w(Na_2SO_4)\ [\%] = \frac{w(SO_4^{2-}) \bullet Mol(Na_2SO_4)}{Mol(SO_4^{2-})}$$

$Mol(SO_4^{2-})$ Molekulargewicht $SO_4^{2-}$
$Mol(Na_2SO_4)$ Molekulargewicht $Na_2SO_4$

Bestimmung der Chloridkonzentration

Grundlage des Verfahrens

Zur Bestimmung des Chloridgehaltes wird die Probe mit Reinstwasser aufgeschlämmt.
Die Chloridkonzentration wird über eine argentometrische Titration ermittelt.

Chemikalien

Reinstwasser (Leitfähigkeit <0,1 μS/cm)
Chlorid-Stammlösung, $c(Cl^-)$ = 0,1000 ± 0,0005 mol/l Silbernitratlösung, $c(AgNO_3)$ = 0,1 mol mol/l bzw. 0,01 mol/l
Salpetersäure $w(HNO_3)$ = 30 %

Geräte

Titroprocessor 670 (Metrohm)
Silberstab-Elektrode
Bezugselektrode ($Hg/HgSO_4$)

Prinzip

Nach dem Aufschlämmen wird die Suspension angesäuert und mit Silbernitrat titriert.

Durchführung

Etwa 1-3 g der Probe werden auf 1 mg genau in ein Becherglas eingewogen.
Nach Zugabe von ca. 80 ml Reinstwasser wird gerührt, das über dem Flüssigkeitsspiegel an der Glaswand haftende Material wird mit etwas Wasser heruntergespült.

Nach 5 min wird die Probe mit Salpetersäure angesäuert, die Elektroden und die Bürettenspitze in die Suspension getaucht und potentiometrisch titriert.

Berechnung

Der prozentuale Massenteil w des Chlorids berechnet sich nach

$$w(Cl^{-})\% = \frac{V_{Ag} \times c \times M \times 100 \times t}{m}$$

$V_{Ag}$ Volumen der bei der Titration der verbrauchten Silbernitratlösung in ml
c Molarität der Silbernitratlösung [mol/l]
M atomare Masse von Chlor
t Titer der Silbernitratlösung

$$w(NaCl)\ [\%] = \frac{w(Cl^{-}) \bullet Mol(NaCl)}{M}$$

Mol(NaCl) Molekulargewicht NaCl

Die erfindungsgemäße wäßrige, kolloidale Gasrußsuspension 1 ist niedrigviskos und zeigt eine hohe optische Dichte, eine gute Lagerstabilität, einen hohen Dispergiergrad und eine exzellente Wasserbeständigkeit der getrockneten Drucke.

Figur 1 zeigt lichtmikroskopische Aufnahmen der Referenzsuspension 3 und der erfindungsgemäßen wäßrigen, kolloidalen Gasrußsuspension 1. Die Referenzsuspensionen 1 - 3 weisen einen hohen Grobanteil auf, beziehungsweise sind teilweise flokuliert und sedimentiert, und erfüllen somit nicht die Anforderungen an eine Ink Jet Tinte. Dagegen zeigt die erfindungsgemäße Gasrußsuspension 1 keine Grobanteile und ausgezeichnete Lagerstabilitäten (kein Sediment).

Beispiel 2:

In Tabelle 2 ist die Abhängigkeit von erfindungsgemäßen wäßrigen, kolloidalen Gasrußsuspensionen 1-4 von dem Salzgehalt dargestellt.

Tabelle 2:

| | | erfindungsgemäße wäßrige, kolloidale Gasrußsuspension | erfindungsgemäße wäßrige, kolloidale Gasrußsuspension | erfindungsgemäße wäßrige, kolloidale Gasrußsuspension | erfindungsgemäße wäßrige, kolloidale Gasrußsuspension |
|---|---|---|---|---|---|
| | | 2 | 3 | 4 | 1 |
| NIPex 160 IQ | % | 15 | 15 | 15 | 15 |
| Azoverbindung der allg. Formel 1 | % | 0,7 | 0,7 | 0,7 | 0,7 |
| Acticide MBS | % | 0,3 | 0,3 | 0,3 | 0,3 |
| Deionisiertes Wasser | % | 84,0 | 84,0 | 84,0 | 84,0 |
| Salzgehalt | ppm | 2500 | 5000 | 10000 | <20 |
| Suspensionskonsistenz nach Herstellung | | flüssig | dickflüssig | geliert, pastös | flüssig |
| Viskosität nach Herstellung [mPas] | | < 10 | > 100 | n.a. | < 10 |
| Lagerstabilität 28 Tage bei 50 °C | | dickflüssig | geliert, pastös | n.a. | flüssig |

Die erfindungsgemäßen wäßrigen, kolloidalen Gasrußsuspensionen 1-4 zeigen, dass bereits eine geringfügige Erhöhung des Salzgehaltes eine starke Viskositätserhöhung hervorruft, diese im Hinblick auf Dosierbarkeit,Pumpfähigkeit und Langzeitstabilität zu ungenügende Eigenschaften haben, um zum Beispiel im Inkjet - Verfahren verwendet werden zu können. Die erfindungsgemäße, wässrige, kolloidale Gasrußsuspension 1 ist dünnflüssig und damit leicht dosierbar und pumpbar. Durch die exzellente Lagerstabilität auch bei Wärmelagerung über 28 Tage hat die erfindungsgemäße Gasrußsuspension 1 optimale Eigenschaften für einen Anwendungseinsatz, wie zum Beispiel im Inkjet - Verfahren.

Beispiel 3:

In Tabelle 3 sind die Eigenschaften von Referenzsuspensionen mit anionischem (Referenzsuspension 4) und nicht ionischem Netzmittelzusatz (Referenzsuspension 5) im Vergleich zur erfindungsgemäßen wäßrigen, kolloidalen Gasrußsuspension 1 dargestellt.

| Tabelle 3: | | | | |
|---|---|---|---|---|
| | | Referenzsuspension 4 | Referenzsuspension 5 | erfindungsgemäße wäßrige, kolloidale Gasrußsuspension 1 |
| NIPex 160 IQ | % | 15 | 15 | 15 |
| Disponil FES 32 IS | % | 6 | --- | --- |
| Hydropalat 3065 | % | --- | 5 | --- |
| Azoverbindung der allg. Formel 1 | % | --- | --- | 0,7 |
| AMP 90 | % | 0,2 | 0,2 | --- |
| Acticide MBS | % | 0,3 | 0,3 | 0,3 |
| deion. Wasser | % | 78,5 | 79,5 | 84,0 |
| | | | | |
| Zeta - Potential | mV | -15 | -4 | -56 |
| Oberflächenspannung | nM/m | 38 | 44 | 72 |
| Optische Dichte (6 µm Draw Downs auf Data Copy Papier) | | 1,2 | 0,9 | 1,5 |

Disponil FES 32 IS ist ein anionisches Netzmittel (Fettalkoholpolyglykolethersulfat) der Firma Cognis.

Hydropalat 3065 ist ein nichtionisches Netzmittel (Mischung ethoxylierter linearer Fettalkohole) der Firma Cognis. AMP 90 ist 2-Amino-2-methyl-1-propanol der Firma Angus Chemie. Die Azoverbindung der allgemeinen Formel 1 ist Tetranatrium-6-amino-4-hydroxy-3-[[7-sulfonato-4-[(4-sulfonatophenyl)azo]-1-naphth-1-yl]azo]naphthalen-2,7-disulfonat, der Firma Bayer.

Im Vergleich zur erfindungsgemäßen wäßrigen, kolloidalen Gasrußsuspension 1 zeigen die netzmittelstabilisierten Referenzsuspensionen 4 und 5, bei Verwendung von nichtionogenen Tensiden (5), ein zu hohes Zetapotential und eine niedrige Oberflächenspannung, während bei Verwendung von anionischen Tensiden (4), auf Grund der starken Wechselwirkungen mit den ebenfalls anionischen Papierbeschichtungen, ein zu starke Benetzung des Papiers und damit ein zu niedrige optische Dichte beobachtet wird (Tabelle 3).

Beispiel 4:

In Tabelle 4 sind die Eigenschaften einer Farbstoff enthaltenden Referenzsuspension (6) im Vergleich zur erfindungsgemäßen wäßrigen, kolloidalen Gasrußsuspension 5 dargestellt.

Tabelle 4:

| | | Referenzsuspension 6 | erfindungsgemäße, wäßrige, kolloidale Gasrußsuspension 5 |
|---|---|---|---|
| NIPex 160 IQ | % | 15 | 15 |
| Azoverbindung der allg. Formel 1 | % | --- | 0,7 |
| Acid Black 1 | % | 1,2 | --- |
| Acticide MBS | % | 0,3 | 0,3 |
| IDIS @ solv.pd | % | 8 | 8 |
| dest. Wasser | % | 75,5 | 76,0 |
| | | | |
| Lichtmikroskop | | 1 | 1 |
| Gefrierstabil | | Ja | Ja |
| pH | | 7,6 | 7,4 |
| Mittlere Partikelgröße | Nm | < 100 | < 100 |
| Viskosität RT | mPas | 4,5 | 4,3 |
| Oberflächenspannung | mN/m | 68 | 68 |
| Zeta-Potential | mV | - 51 | - 56 |
| Lagerstabilität. 50 °C/7 Tage | mPas | < 10* | < 10* |
| Lagerstabilität. 50 °C/14 Tage | mPas | < 10* | < 10* |
| Lagerstabilität. 50 °C/28 Tage | mPas | < 10* | < 10* |
| Wasserbeständigkeit | | schlecht | Sehr gut |
| * = keinen Bodensatz, keine Reagglomeration | | | |

IDIS @ solv.pd ist 1,3-Propandiol der Firma Degussa AG. Acid Black 1 ist Naphthol Blue Black mit einem Salzgehalt von 1,5 Gew.-%.der Firma Aldrich Chemical Company. Die Azoverbindung der allgemeinen Formel 1 ist Tetranatrium-6-amino-4-hydroxy-3-[[7-sulfonato-4-[(4-sulfonatophenyl)azo]-1-naphth-1-yl]azo]naphthalen-2,7-disulfonat, der Firma Bayer.

Lichtmikroskopische Untersuchung des Dispergiergrades:

Der Dispergiergrad der Suspensionsproben wird bei 400 facher Vergrößerung beurteilt. Anhand der Skalierung am Lichtmikroskop können bei dieser Einstellung Grobpartikel > 1 μm gut erkannt werden.

Bewertungsskala:

Note 1: sehr gut; keine Grobanteile > 1 μm,
Note 2: befriedigend; sehr wenige Grobanteile > 1 μm,
Note 3: schlecht; viele Grobpartikel > 1 μm.

Bestimmung der Viskosität: .

Das rheologische Verhalten wird in einem Rotationsversuch mit Schergeschwindigkeitsvorgabe (CSR) mit einem Physica Rheometer UDS 200 erfaßt. Bei einer Schergeschwindigkeit von 1000 $s^{-1}$ wird der Viskositätswert abgelesen.

Bestimmung der mittleren Partikelgröße:

Die Partikelgrößenverteilung wird mit einem Photonenkorrelationspektrometer (PCS), Typ Horiba LB-500, ermittelt und als mittlere Partikelgröße der angezeigte "median - Wert" abgelesen. Die Messung erfolgt an einer unverdünnten Suspensionsprobe.

Bestimmung der Oberflächenspannung:

Mit dem Blasentensiometer BP2 der Firma Krüss wird die dynamische Oberflächenspannung ermittelt. Der Endwert wird bei 3000 ms abgelesen.

Lagerstabilitätsprüfung bei 50 °C über 28 Tage:

Die Proben werden bei 50 °C für 28 Tage gelagert. Die Viskosität und Sedimentationsneigung werden überprüft. Je 300 ml Suspensionsprobe werden für 28 Tage bei 50 °C im Trockenschrank in einer geschlossenen Glasflasche gelagert. Die Sedimentbildung am Boden wird mit einem Spatel überprüft und die Viskosität mit einem Brookfield Viskosimeter DV II plus gemessen. Zusätzlich wird die Sedimentbildung an einigen Proben bei Lagerung bei Raumtemperatur untersucht.

Gefrierstabilitätsprüfung:

Die Proben werden eingefroren bei -25°C und nach dem Auftauen der Dispergiergrad mittels Lichtmikroskop überprüft.
Eine Probe wird als gefrierstabil beurteilt, wenn die eingefrorene Probe nach Auftauen wieder eine dünnflüssige Konsistenz hat, kein Sediment bildet und unter dem Lichtmikroskop keine Reagglomerationen sichtbar sind.

Bestimmung des pH - Wertes:

Der pH - Wert wird an der unverdünnten Suspension unter Verwendung des pH-Meters CG 837 der Firma Schott bestimmt. Dazu wird die Glaselektrode in die Lösung getaucht und nach fünf Minuten der temperaturkorrigierte pH-Wert abgelesen.

Bestimmung des Zetapotentials:

Das Zetapotential wird mit einem MBS-8000 der Fa. Matec bestimmt. Die Proben werden unverdünnt gemessen. Das Zetapotential wird mittels der elektrokinetischen Schallamplitude (ESA) bestimmt.

Wasserbeständigkeit:

Zur Beurteilung der Wasserbeständigkeit werden aus den Suspensionen mit folgender Rezeptur Tinten mit 4,5 % Rußgehalt hergestellt:

30,0 % Gasrußsuspension

12,0 % 2- Pyrrolidon

3,0 % Liponic EG 07

1,2 % IDID @ solv.hd

4,0 % IDIS @ solv.pd

49,8 % deion. Wasser

Mit Hilfe eines Inkjet - Office - Druckers HP Deskjet 6122 werden Druckdemos auf Kopierpapier erstellt und für 24 h bei Raumtemperatur getrocknet. Die Druckdemos werden in einer Fotoschale mit dest. Wasser untergetaucht und für 5 min. eingeweicht.
Nach der Einweichzeit werden die Drucke aus dem Wasserbad genommen und für 24 h bei Raumtemperatur

getrocknet.

Bewertet wird die Wasserbeständigkeit durch visuelle Beurteilung der Verfärbung des Kopierpapiers.

Bewertungsskala:

Sehr gut = keine Verfärbung des Papiers
Schlecht = Verfärbung des Papiers

Die erfindungsgemäße wäßrige, kolloidale Gasrußsuspension 5 hat gegenüber der Referenzsuspension 6 eine bessere Wasserbeständigkeit. Die erfindungsgemäße wäßrige, kolloidale Gasrußsuspension 5 erfüllt alle Anforderungen an eine optimale Suspension.

Beispiel 5:

Aus der erfindungsgemäßen Gasrußsuspension 5 werden mit 2-Pyrrolidon, 1,2-Hexandiol, 1,3 Propandiol, ethox. Glyzerin, Dimethylaminoethanol und deionisiertem Wasser Tinten mit 4,5 % Rußanteil hergestellt. Dazu wird die Vormischung an Tintenadditiven vorgelegt und unter Rühren die Rußsuspension vorsichtig zugegeben. Die fertige Tinte wird mit einer Filterfeinheit von 500 nm filtriert. Danach werden 6 μm - Draw Downs mit dem Aufstrichgerät K Control Coater auf Kopierpapier (Typ: Kompass Copy Office) hergestellt und nach 24 h die optische Dichte mit einem Densitometer bestimmt.

Die Druckversuche werden mit einem Canon Office Drucker BJC-S750 durchgeführt. Dazu wird die Tinte vorab unter Vakuum entlüftet und in eine gereinigte Original - Druckerpatrone eingefüllt.

Folgende Drucktests werden durchgeführt:

a. Druck einer Seite auf Kopierpapier und auf verschiedenen, marktüblichen Ink Jet Papieren zur Bestimmung der optischen Dichte und visuellen Beurteilung der Druckqualität.

b. Refire-Tests nach 1, 3 und 7 Tagen Druckpause zur Beurteilung des Anschreib - beziehungsweise Antrocknungsverhaltens der Tinte.

In Tabelle 5 sind die Druckergebnisse zusammengestellt.

Die erfindungsgemäßen Tinten zeichnen sich durch sehr gute Verdruckbarkeit, hohe optische Dichten und sehr gute Lagerstabilität aus.

Tabelle 5:

| Erfindungsgemäße Tinte | 1 |
|---|---|
| Rußkonzentration [%] | 4,5 |
| Tintenrezeptur [%]<br>erfindungsgemäße wäßrige, kolloidale Gasrußsusp.5<br>2-Pyrrolidon<br>Liponic EG-07 (ethoxyliertes Glyzerin)<br>IDIS@solv.pd (1,3 Propandiol)<br>IDIS@solv.hd (1,2 Hexandiol)<br>deion. Wasser<br>Dimethylaminoethanol | <br>30,0<br>12,0<br>1,5<br>1,5<br>1,5<br>53,48<br>0,02 |
| Lichtmikroskop | 1 |
| pH-Wert | 8,8 |
| Viskosität [mPas] | 2,7 |
| Oberflächenspannung [mN/m] | 47 |
| Verwendeter Office Drucker | Canon BJC S750 |
| optische Dichte (OD) auf Kompass Copy Office | 1,51 |

(fortgesetzt)

| | |
|---|---|
| OD auf Inkjet Papier HP 51634 Z<br>OD auf Inkjet Papier CANON HR-101<br>OD auf Inkjet Papier EPSON 720 dpi | 1,58<br>1,60<br>1,62 |
| visueller Gesamteindruck Druckbild* | 1 |
| Düsenverstopfungen | keine |
| Antrocknungen am Druckkopf | keine |
| Andruck nach Druckpause 60 min.**<br>Andruck nach Druckpause 1 Tag<br>Andruck nach Druckpause 3 Tage<br>Andruck nach Druckpause 7 Tage | +<br>+<br>+<br>+ |
| Bemerkung:<br>* 1 = sehr gut ; 2 = befriedigend; 3 = schlecht<br>**+ = keine Anschreibprobleme; - = Anschreibprobleme | |

Beispiel 6:

In Tabelle 6 sind die Zusammensetzungen und Eigenschaften der Referenztinten und der erfindungsgemäßen Tinte dargestellt.

Tabelle 6

| Tintenprobe | Erfindungsgemäße Tinte | Referenztinte | Referenztinte |
|---|---|---|---|
| Nr. | 2 | 2 | 1 |
| Erfindungsgemäße wässrige, kolloidale Gasrußsuspension 1 [%] | 13,30 | 13,30 | -- |
| Referenzsuspension 1 [%] | -- | -- | 13,30 |
| Azoverbindung der allg. Formel 1 | -- | 4,91 | 4,91 |
| Ethanol [%] | 5,00 | 5,00 | 5,00 |
| Ethylenglycol [%] | 20,00 | 20,00 | 20,00 |
| 1,2-Hexandiol [%] | 5,00 | 5,00 | 5,00 |
| deionisiertes Wasser [%] | 56,70 | 51,79 | 51,79 |
| | | | |
| Suspensionskonsistenz | flüssig | flüssig | flüssig |
| Optische Dichte auf Kopierpapier* | 1,51 | 1,45 | 1,26 |
| Mikroskop (Dispergiergrad) | ++ | -- | -- |
| * = 6 μm Tinten Draw Down auf Kopierpapiersorte Data Copy<br>++ sehr gut, o befriedigend, -- sehr schlecht | | | |

Als Azoverbindung der allgemeinen Formel 1 wird die gleiche Azoverbindung eingesetzt wie bei der erfindungsgemäßen wässrigen, kolloidalen Gasrußsuspension 1 (Tetranatrium-6-amino-4-hydroxy-3-[[7-sulfonato-4-[(4-sulfonatophenyl)azo]-1-naphth-1-yl]azo]naphthalen-2,7-disulfonat).

Aus der erfindungsgemäßen Gasrußsuspension wird mit Ethanol, Ethylenglycol, 1,2 Hexandiol und deion. Wasser eine erfindungsgemäße Tinte mit 2 % Gasrußanteil hergestellt. Dazu wird die Vormischung an Tintenadditiven vorgelegt und unter Rühren die Rußsuspension vorsichtig zugegeben.

Mit dem Lichtmikroskop wird der Dispergiergrad beurteilt.

Figur 2 zeigt lichtmikroskopische Aufnahmen der erfindungsgemäßen Tinte 2 und der Referenztinte 2 und Figur 3 zeigt lichtmikroskopische Aufnahmen der Referenztinte 1. Die Referenztinte 1 weist einen sehr hohen Grobanteil

auf, beziehungsweise ist fast vollständig flokuliert, während die Referenztinte 2 teilweise flokuliert und die erfindungsgemäße Tinte 2 gar nicht flokuliert ist. Insbesondere zeigt die erfindungsgemäße Tinte 2 einen hohen Dispergiergrad und keine Grobanteile.

Beide erfindungsgemäßen Tinten basierend auf Gasruß ergeben auf Kopierpapier sehr hohe optische Dichten, während die Referenztinte mit Furnaceruß wesentlich niedrigere optische Dichte auf Kopierpapier ergibt.

## Patentansprüche

1. Wäßrige, kolloidale Gasrußsuspension, **dadurch gekennzeichnet, dass** diese wenigstens einen Gasruß, zwischen 0,1 und 1 Gew.-% einer Azoverbindung der allgemeinen Formel 1,

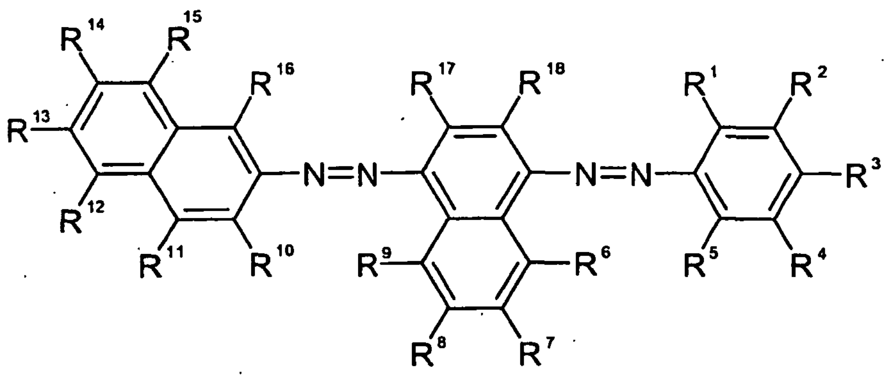

(1)

wobei $R^1$ - $R^{18}$ gleich oder verschieden sein können und aus Wasserstoff, hydrophilen oder hydrophoben Gruppen, Akzeptor- oder Donatorsubstituenten oder Teilen von aliphatischen, aromatischen oder heteroaromatischen, acyclischen, cyclischen oder mehrfach cyclischen Systemen mit Akzeptor-, Donator-, hydrophilen oder hydrophoben Gruppen bestehen, und Wasser enthält.

2. Wässrige, kolloidale Gasrußsuspension nach Anspruch 1, **dadurch gekennzeichnet, dass** der Gasruß einen Flüchtigenanteil (950°C) von < 21 Gew.-%, eine BET-Oberfläche von 80 - 350 $m^2/g$, eine Primärteilchengröße von 8 -40 nm und eine DBP-Zahl von 40 - 200 ml/100g hat.

3. Wäßrige, kolloidale Gasrußsuspension nach Anspruch 1, **dadurch gekennzeichnet, daß** der Gasrußanteil < 30 Gew.-% ist.

4. Wäßrige, kolloidale Gasrußsuspension nach Anspruch 1, **dadurch gekennzeichnet, daß** die Azoverbindung der allgemeinen Formel 1 weniger als 30 Gew.-% Verunreinigung enthält.

5. Wäßrige, kolloidale Gasrußsuspension nach Anspruch 1, **dadurch gekennzeichnet, daß** die Azoverbindung der allgemeinen Formel 1 weniger als 10 Gew.-% Salz enthält.

6. Wäßrige, kolloidale Gasrußsuspension nach Anspruch 1, **dadurch gekennzeichnet, daß** die Azoverbindung 2-[[4-[(1-hydroxy-6-phenylamino-3-sulfo-naphthalen-2-yl)azo]-6-sulfo-naphthalen-1-yl]azo]-5-methyl-benzen-1,4-disulfonsäure, 5-[4-(4-(7-[[2-ethoxy-4-(4-methyl-2-sulfo-phenylazo)-6-sulfo-naphthalen-1-yl]azo]-8-hydroxy-3,6-disulfo-naphthalen-1-ylamino)-6-phenylsulfanyl-[1,3,5]triazin-2-ylamino]-phenylazo]-2-hydroxy-benzoesäure oder Tetranatrium-6-amino-4-hydroxy-3-[[7-sulfonato-4-[(4-sulfonatophenyl)azo]-1-naphth-1-yl]azo]naphthalen-2,7-disulfonat ist.

7. Wäßrige, kolloidale Gasrußsuspension nach Anspruch 6, **dadurch gekennzeichnet, daß** die Azoverbindung weniger als 30 Gew.-% Verunreinigung und weniger als 10 Gew.-% Salz enthält.

8. Wäßrige, kolloidale Gasrußsuspension nach Anspruch 6, **dadurch gekennzeichnet, daß** diese Biozide, Netzmittel und/oder Additive enthält.

9. Wäßrige, kolloidale Gasrußsuspension nach Anspruch 8, **dadurch gekennzeichnet, daß** das Netzmittel ein Fettalkoholethoxylat, Polyacrylsäure oder/und deren Derivate, Copolymer enthaltend Acrylsäure, Acrylsäurederivate, Styrole, Styrolderivate und/oder Polyether, Ligninsulfonat, Alkylbezolsulfonat, Naphthalinsulfonsäurederivat, Copolymer enthaltend Maleinsäureanhydrid und/oder Maleinsäurederivate oder Kombinationen aus den genannten Netzmitteln ist.

10. Wäßrige, kolloidale Gasrußsuspension nach Anspruch 8, **dadurch gekennzeichnet, daß** der Netzmittelanteil zwischen 0 und 1 Gew.-% ist.

11. Wäßrige, kolloidale Gasrußsuspension nach Anspruch 8, **dadurch gekennzeichnet, daß** das Additiv ein Alkohol, Glykol, Glykolether, Heterocyclus oder Glyzerin ist.

12. Wäßrige, kolloidale Gasrußsuspension nach Anspruch 8, **dadurch gekennzeichnet, daß** der Additivanteil < 30 Gew.-% ist.

13. Wäßrige, kolloidale Gasrußsuspension nach Anspruch 1, **dadurch gekennzeichnet, daß** diese netzmittelfrei, der Anteil der Azoverbindung der allgemeinen Formel 1 zwischen 0,1 und 1 Gew.-% und der Salzgehalt der wäßrigen, kolloidalen Gasrußsuspension weniger als 2500ppm ist.

14. Verfahren zur Herstellung der wäßrigen, kolloidalen Gasrußsuspension nach Anspruch 1, **dadurch gekennzeichnet, daß** man den Gasruß und die lösliche Azoverbindung der allgemeinen Formel 1 in Wasser dispergiert.

15. Verfahren zur Herstellung der wäßrigen, kolloidalen Pigmentsuspension nach Anspruch 14, **dadurch gekennzeichnet, daß** man die Dispergierung mit Perlmühlen, Ultraschall-Geräten, Hochdruckhomogenisatoren, Microfluidizer, Ultra-Turrax oder vergleichbaren Aggregaten durchführt.

16. Verwendung der wäßrigen, kolloidalen Gasrußsuspension nach Anspruch 1 in Tinten, Ink Jet Tinten, Lacken, Druckfarben, Latizes, Textilien, Leder, Klebstoffen, Silikonen, Kunststoffen, Beton und Baustoffen.

17. Tinte, **dadurch gekennzeichnet, daß** diese die wäßrige, kolloidale Gasrußsuspension nach Anspruch 1 enthält und der Gehalt an Azoverbindung der allgemeinen Formel 1 zwischen 0,01 und 0,5 Gew.-% ist.

18. Tinte nach Anspruch 17, **dadurch gekennzeichnet, dass** diese netzmittelfrei, der Anteil der Azoverbindung der allgemeinen Formel 1 zwischen 0,01 und 0,5 Gew.-% und der Salzgehalt der Tinte weniger als 250ppm ist.

## Claims

1. Aqueous, colloidal gas black suspension, **characterized in that** it comprises at least one gas black, between 0.1 and 1% by weight of an azo compound of formula 1,

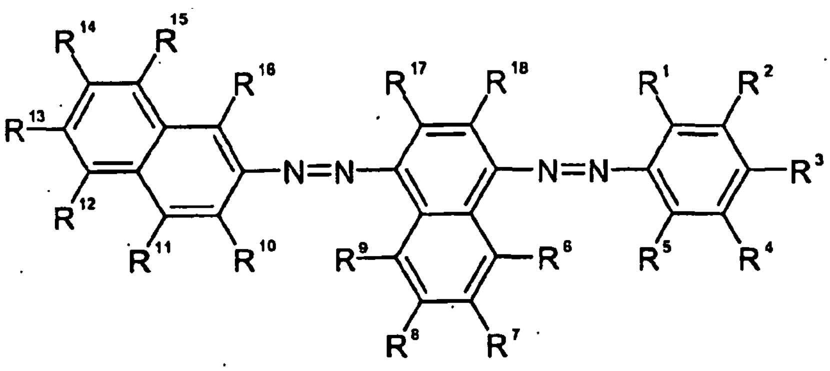

(1)

wherein $R^1$ to $R^{18}$, which may be identical or different, consist of hydrogen, hydrophilic or hydrophobic groups, acceptor or donor substituents or portions of aliphatic, aromatic or heteroaromatic, acyclic, cyclic or multiple cyclic systems with acceptor, donor, hydrophilic or hydrophobic groups, and water.

2. Aqueous, colloidal gas black suspension according to Claim 1, **characterized in that** the gas black has a volatile matter content (950° C.) of <21% by weight, a BET surface area of 80 to 350 $m^2$/g, a primary particle size of 8 to 40 nm and a DBP number of 40 to 200 ml/100 g.

3. Aqueous, colloidal gas black suspension according to Claim 1, **characterized in that** the gas black is present in an amount of <30% by weight.

4. Aqueous, colloidal gas black suspension according to Claim 1, **characterized in that** the azo compound of formula 1 contains less than 30% by weight contamination.

5. Aqueous, colloidal gas black suspension according to Claim 1, **characterized in that** the azo compound of formula 1 contains less than 10% by weight salt.

6. Aqueous, colloidal gas black suspension according to Claim 1, **characterized in that** the azo compound is 2-[[4-[(1-hydroxy-6-phenylamino-3-sulpho-naphthalen-2-yl)azol-6-sulpho-naphthalen-1-yl]azo]-5-methyl-benzene-1,4-disulphonic acid, 5-[4-(4-(7-[[2-ethoxy-4-(4-methyl-2-sulpho-phenylazo)-6-sulpho-naphthalen-1-yl]azo]-8-hydroxy-3,6-disulpho-naphthalen-1-ylamino)-6-phenylsulphanyl-[1,3,5]triazin-2-ylamino]-phenylazo]-2-hydroxy-benzoic acid or tetrasodium 6-amino-4-hydroxy-3-[[7-sulphonato-4-[(4-sulphonatophenyl)azo]-1-naphth-1-yl]azo]naphthalene-2,7-disulphonate.

7. Aqueous, colloidal gas black suspension according to Claim 6, **characterized in that** the azo compound contains less than 30% by weight contamination and less than 10% by weight salt.

8. Aqueous, colloidal gas black suspension according to Claim 6, **characterized in that** it comprises biocides, wetting agents and/or additives.

9. Aqueous, colloidal gas black suspension according to Claim 8, **characterized in that** the wetting agent is a fatty alcohol ethoxylate, polyacrylic acid and/or, polyacrylic acid derivatives, copolymer containing acrylic acid, acrylic acid derivatives, styrenes, styrene derivatives and/or polyethers, lignin sulphonate, alkyl benzene sulphonate, naphthalene sulphonic acid derivative, copolymer containing maleic acid anhydride and/or maleic acid derivatives and mixtures thereof.

10. Aqueous, colloidal gas black suspension according to Claim 8, **characterized in that** the amount of the wetting agent is between 0 and 1% by weight.

11. Aqueous, colloidal gas black suspension according to Claim 8, **characterized in that** the additive is an alcohol, glycol, glycol ether, heterocycle or glycerol.

12. Aqueous, colloidal gas black suspension according to Claim 8, **characterized in that** the additive is present in an amount of <30% by weight.

13. Aqueous, colloidal gas black suspension according to Claim 1, **characterized in that** it is free from wetting agent, the azo compound of general formula 1 is present in an amount of between 0.1 and 1% by weight and where the aqueous, colloidal gas black suspension has a salt content of less than 2500 ppm.

14. Process for producing the aqueous, colloidal gas black suspension according to Claim 1, **characterized in that** it comprises dispersing the gas black and the soluble azo compound of formula 1 in water.

15. Process for producing the aqueous, colloidal pigment suspension according to Claim 14, **characterized in that** the dispersing is carried out in a bead mill, ultrasound equipment, high-pressure homogenizer, microfluidiser, Ultra-Turrax or comparable assemblies.

16. Use of the aqueous, colloidal gas black suspension according to Claim 1 in inks, ink jet inks, paints, printing inks, latices, textiles, leather, adhesives, silicones, plastics materials, concrete or construction materials.

17. Ink, **characterized in that** it comprises the aqueous, colloidal gas black suspension according to Claim 1 and the content of azo compound of formula 1 is between 0.01 and 0.5% by weight.

**18.** Ink according to Claim 17, **characterized in that** it is free from wetting agent, the azo compound of formula 1 is present in an amount of between 0.01 and 0.5% by weight and the ink has a salt content of less than 250 ppm.

## Revendications

**1.** Suspension aqueuse, colloïdale de noir de fumée, **caractérisée en ce qu'**elle contient au moins un noir de fumée, entre 0,1 et 1% en poids d'un composé azo de formule générale 1

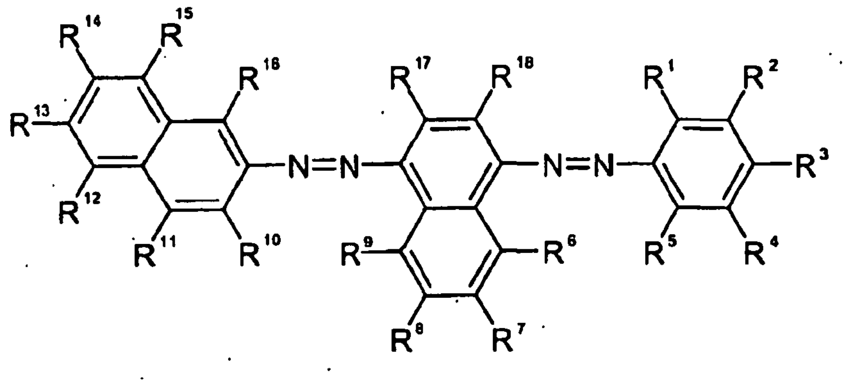

(1)

où $R^1$-$R^{18}$ peuvent être identiques ou différents et sont constitués par hydrogène, des groupes hydrophiles ou hydrophobes, des substituants accepteurs ou donneurs ou des parties de systèmes aliphatiques, aromatiques ou hétéroaromatiques, acycliques, cycliques ou polycycliques avec des groupes accepteurs, donneurs, hydrophiles ou hydrophobes, et de l'eau.

**2.** Suspension aqueuse, colloïdale de noir de fumée selon la revendication 1, **caractérisée en ce que** le noir de fumée présente une proportion volatile (950°C) <21% en poids, une surface BET de 80-350 $m^2/g$, une grosseur des particules primaires de 8-40 nm et un indice DBP de 40-200 ml/100 g.

**3.** Suspension aquèuse, colloïdale de noir de fumée selon la revendication 1, **caractérisée en ce que** la proportion de noir de fumée est <30% en poids.

**4.** Suspension aqueuse, colloïdale de noir de fumée selon la revendication 1, **caractérisée en ce que** le composé azo de formule générale 1 contient moins de 30% en poids d'impuretés.

**5.** Suspension aqueuse, colloïdale de noir de fumée selon la revendication 1, **caractérisée en ce que** le composé azo de formule générale 1 contient moins de 10% en poids de sel.

**6.** Suspension aqueuse, colloïdale de noir de fumée selon la revendication 1, **caractérisée en ce que** le composé azo est l'acide 2-[[4-[(1-hydroxy-6-phénylamino-3-sulfo-naphtalén-2-yl)azo]-6-sulfo-naphtalén-1-yl]azo]-5-méthyl-benzène-1,4-disulfonique, l'acide 5-[4-(4-(7-[[2-éthoxy-4-(4-méthyl-2-sulfo-phénylazo)-6-sulfo-naphtalén-1-yl]azo]-8-hydroxy-3,6-disulfo-naphtalén-1-ylamino)-6-phénylsulfanyl-[1,3,5]triazin-2-ylamino]-phénylazo]-2-hydroxy-benzoïque ou le 6-amino-4-hydroxy-3-[[7-sulfonato-4-[(4-sulfonatophényl)azo]-1-napht-1-yl]azo]naphtalène-2,7-disulfonate tétrasodique.

**7.** Suspension aqueuse, colloïdale de noir de fumée selon la revendication 6, **caractérisée en ce que** le composé azo contient moins de 30% en poids d'impuretés et moins de 10% en poids de sel.

**8.** Suspension aqueuse, colloïdale de noir de fumée selon la revendication 6, **caractérisée en ce qu'**elle contient des biocides, des mouillants et/ou des additifs.

**9.** Suspension aqueuse, colloïdale de noir de fumée selon la revendication 8, **caractérisée en ce que** le mouillant est un éthoxylate d'alcool gras, un poly(acide acrylique) et/ou ses dérivés, un copolymère contenant de l'acide acrylique, des dérivés de l'acide acrylique, du styrène, des dérivés du styrène et/ou des polyéthers, un ligninesulfonate, un alkylbenzènesulfonate, un dérivé de l'acide naphtalènesulfonique, un copolymère contenant de l'anhydride de l'acide maléique et/ou des dérivés de l'acide maléique ou des combinaisons des mouillants mentionnés.

**10.** Suspension aqueuse, colloïdale de noir de fumée selon la revendication 8, **caractérisée en ce que** la proportion de mouillant est comprise entre 0 et 1% en poids.

**11.** Suspension aqueuse, colloïdale de noir de fumée selon la revendication 8, **caractérisée en ce que** l'additif est un alcool, un glycol, un glycoléther, un hétérocycle ou le glycérol.

**12.** Suspension aqueuse, colloïdale de noir de fumée selon la revendication 8, **caractérisée en ce que** la proportion d'additifs est <30% en poids.

**13.** Suspension aqueuse, colloïdale de noir de fumée selon la revendication 1, **caractérisée en ce qu'**elle est exempte de mouillant, la proportion du composé azo de formule générale 1 est comprise entre 0,1 et 1% en poids et la teneur en sel de la suspension aqueuse, colloïdale de noir de fumée est inférieure à 2 500 ppm.

**14.** Procédé de préparation de la suspension aqueuse, colloïdale de noir de fumée selon la revendication 1, **caractérisé en ce qu'**on disperse le noir de fumée et le composé azo soluble de formule générale 1 dans l'eau.

**15.** Procédé de préparation de la suspension aqueuse, colloïdale de pigment selon la revendication 14, **caractérisé en ce qu'**on réalise la dispersion avec des broyeurs à billes, des appareils à ultrasons, des homogénéisateurs à haute pression, des microfluidiseurs, un Ultra-Turrax ou des appareils comparables.

**16.** Utilisation de la suspension aqueuse, colloïdale de noir de fumée selon la revendication 1 dans les encres, les encres pour imprimantes à jet d'encre, les laques, les encres d'impression, les latex, les textiles, le cuir, les adhésifs, les silicones, les matériaux synthétiques, le béton et les matériaux de construction.

**17.** Encre, **caractérisée en ce qu'**elle contient la suspension aqueuse, colloïdale de noir de fumée selon la revendication 1 et la teneur en composé azo de formule générale 1 est comprise entre 0,01 et 0,5% en poids.

**18.** Encre selon la revendication 17, **caractérisée en ce qu'**elle est exempte de mouillant, la proportion de composé azo de formule générale 1 est comprise entre 0,01 et 0,5% en poids et la teneur en sel de l'encre est inférieure à 250 ppm.

Lichtmikroskopische Aufnahme der Referenzsuspension 3

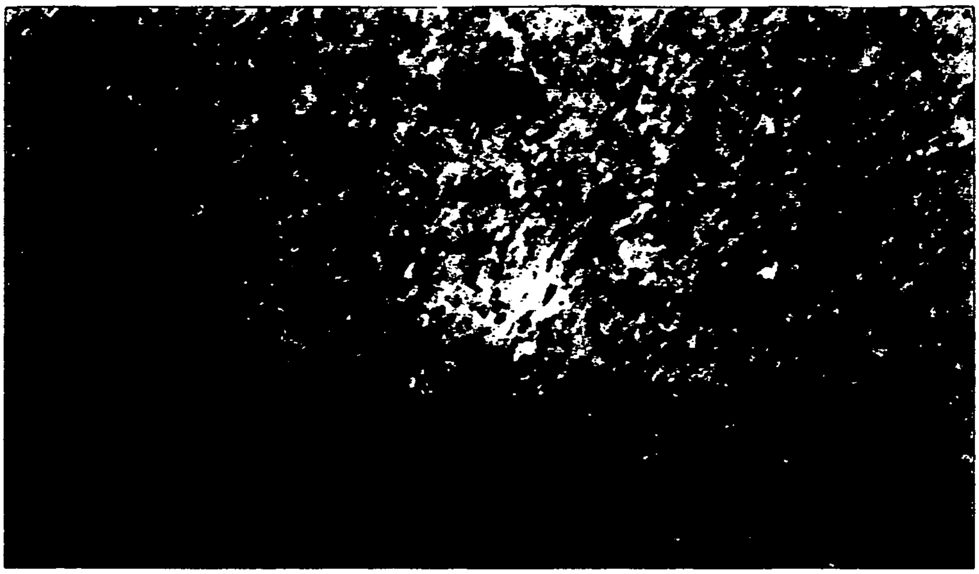

Lichtmikroskopische Aufnahme der erfindungsgemäßen, kolloidalen, wässrigen Gasrußsuspension 1

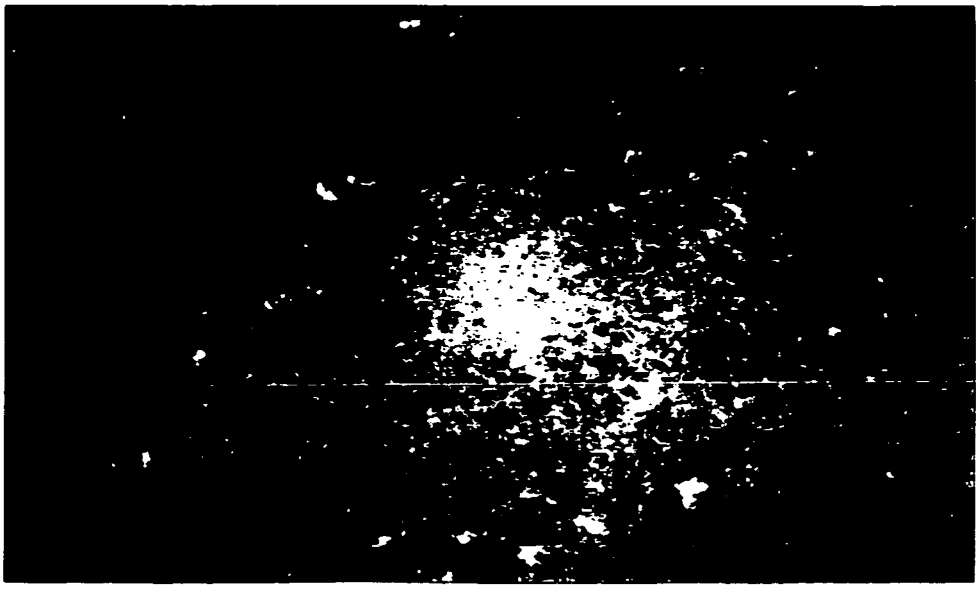

Figur 1

Lichtmikroskopische Aufnahme der
erfindungsgemäßen
Tinte 2

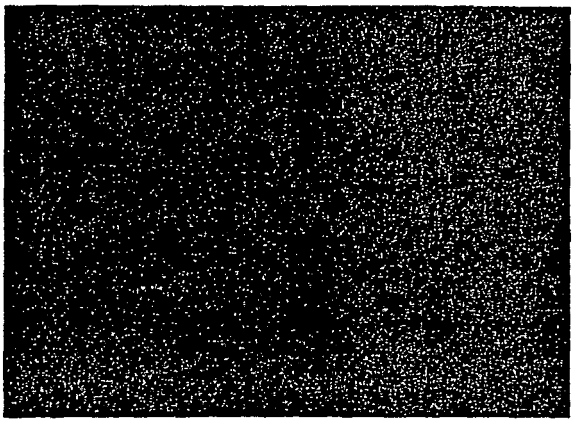

Lichtmikroskopische Aufnahme der
Referenztinte 2

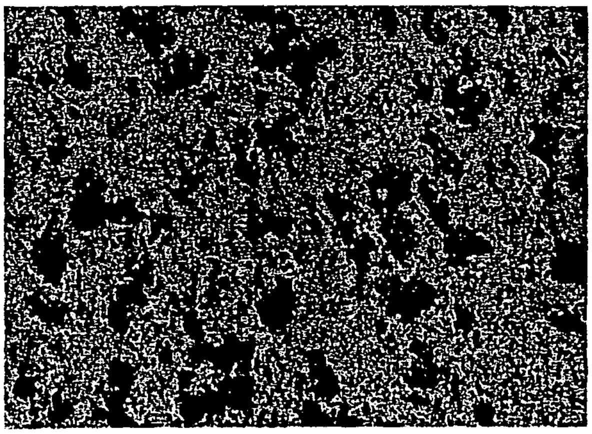

Figur 2

Lichtmikroskopische Aufnahme der
Referenztinte 1

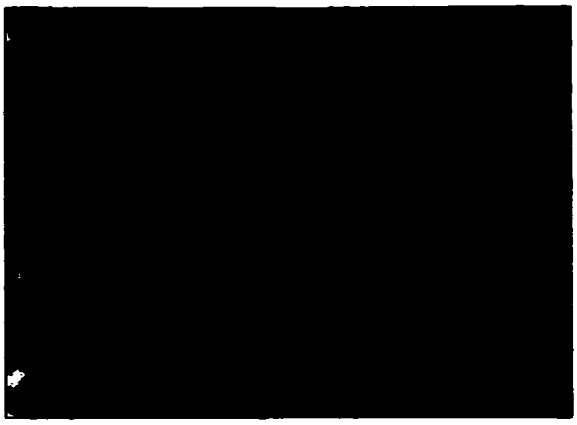

Figur 3